# EUROPÄISCHE PATENTSCHRIFT

(11) **EP 1 931 719 B1**
(45) Veröffentlichungstag und Bekanntmachung des Hinweises auf die Patenterteilung: **07.01.2015**
(21) Anmeldenummer: 06793366.3
(22) Anmeldetag: 08.09.2006
(51) Int. Cl.: C08G 77/06, C08G 77/18, C08G 77/16

(54) **VERFAHREN ZUR HERSTELLUNG VON ORGANOPOLYSILOXANEN**
METHOD FOR PRODUCING ORGANOPOLYSILOXANES
PROCEDE DE PRODUCTION DE POLYORGANOSILOXANES

(30) Priorität: 04.10.2005 DE 102005047395
(43) Veröffentlichungstag der Anmeldung: 18.06.2008
(73) Patentinhaber: Wacker Chemie AG, 81737 München (DE)
(72) Erfinder: ACKERMANN, Hartmut, 84489 Burghausen (DE)
(74) Vertreter: Budczinski, Angelika
(86) Internationale Anmeldenummer: PCT/EP2006/066183
(87) Internationale Veröffentlichungsnummer: WO 2007/039402

(56) Entgegenhaltungen:
- EP-A- 1 205 505
- DD-A- 228 550
- US-A- 4 609 752

## Beschreibung

Die Erfindung betrifft ein mehrstufiges Verfahren zur Herstellung von Organopolysiloxanen durch Hydrolyse und Kondensation von Chlorsilanen.

Verfahren.zur Herstellung von Organopolysiloxanen sind bereits bekannt. Hierzu sei z.B. auf DE 16 68 172 A verwiesen, bei dem ein wässerlösliches, inertes,Lösungsmittel verwendet wird. Des Weiteren wird in DE 854 708 B ein Verfahren zur Herstellung von Siloxanharzen beschrieben, bei dem Alkoxylierung, Hydrolyse und Kondensation in einem Schritt durchgeführt werden, wobei die Reaktionen unkontrolliert ablaufen.

Gegenstand.der vorliegenden Erfindung ist ein Verfahren zur Herstellung von Organopolysiloxanen, bei dem
in einem ersten Schritt kontinuierlich in einem Loop-Reaktor Chlorsilane mit 0,002 bis 0,6 Mol Wasser je Mol hydrolysierbaren Chlors und mit 0,3 bis 1,6 Mol Alkohol je Mol hydrolysierbaren Chlors umgesetzt werden, wobei das Molverhältnis Wasser zu Alkohol 0,001 bis 1,5 beträgt,
in einem zweiten Schritt das in der ersten Stufe erhaltene Reaktionsgemisch gegebenenfalls mit einem in Wasser unlöslichen organischen Lösungsmittel mit einer Dichte von unter 0,9 kg/l vermengt und Wasser in Mengen von 0,2 bis 100 mol Wasser je Mol Si-Komponente zudosiert wird, wobei der zweite Schritt in einem Batchreaktor durchgeführt wird, und
in einem dritten Schritt nach Beendigung der Reaktionen des zweiten Schritts die wässrig-alkoholische Phase abgetrennt wird.

Im Rahmen der vorliegenden Erfindung sollen von dem Begriff Organopolysiloxane sowohl polymere, oligomere wie auch dimere Siloxane mitumfasst werden.

Bei:den im ersten Schritt des erfindungsgemäßen Verfahrens eingesetzten Chlorsilanen handelt es sich vorzugsweise um solche der Formel

RₐSiCl₄₋ₐ (I),

wobei R gleich oder verschieden sein kann und einen einwertigen, SiC-gebundenen, gegebenenfalls substituierten Kohlenwasserstoffrest bedeutet und
a 0, 1, 2, 3 ist.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-bctylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Reste R sind alle für R oben genannten Reste, die mit Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Acryloxygruppen, Methacryloxygruppen, Hydroxygruppen und Halogengruppen substituiert sein.

Bevorzugt handelt es sich bei Rest R um Kohlenwasserstoffreste mit 1 bis 8 Kohlenstoffatomen, besonders bevorzugt um den Methylrest.

Beispiele für Silane der Formel (I) sind Methyltrichlorsilan, Dimethyldichlorsilan, Trimethylchlorsilan, Isooctyltrichlorsilan, Phenyltrichlorsilan, Diphenyldichlorsilan und Methylphenyldichlorsilan.

Die im erfindungsgemäßen Verfahren eingesetzten Silane sind bevorzugt bei 20°C und einem Druck von 900 bis 1100 hPa flüssig.

Bevorzugt werden Mischungen von Silanen der Formel (I) mit mindestens einem Trichlorsilan eingesetzt.

Im Rahmen der vorliegenden Erfindung soll unter hydrolysierbarem Chlor das Chlor verstanden werden, das in Form von SiCl-Gruppen vorliegt.

Im ersten Schritt des erfindungsgemäßen Verfahrens werden Chlorsilane mit bevorzugt 0,0021 bis 0,58 Mol, besonders bevorzugt 0,0022 bis 0,55 Mol, Wasser je Mol hydrolysierbaren Chlors umgesetzt.

Im ersten Schritt des erfindungsgemäßen Verfahrens werden Chlorsilane mit bevorzugt 0,35 bis 1,5 Mol, besonders bevorzugt 0,4 bis 1,4 Mol, Alkohol je Mol hydrolysierbaren Chlors umgesetzt.

Im ersten Schritt des erfindungsgemäßen Verfahrens wird Wasser zu Alkohol im Molverhältnis von bevorzugt 0,0015 bis 1,45 eingesetzt.

Beispiele für Alkohole, die im ersten Schritt des erfindungsgemäßen Verfahrens eingesetzt werden können, sind alle bei einer Temperatur von 20°C und einem Druck von 900 bis 1100 hPa flüssigen Alkohole, wie Methanol, Ethanol, n-Propanol, i-Propanol, Butanol, Pentanol, Hexanol, Heptanol, wobei Methanol, Ethanol und Butanol bevorzugt und Ethanol besonders bevorzugt sind.

Falls erwünscht, können im ersten Schritt des erfindungsgemäßen Verfahrens zusätzlich zu Chlorsilanen, Wasser und Alkohol auch weitere Stoffe eingesetzt werden. Beispiele für gegebenenfalls eingesetzte weitere Stoffe sind wasserunlösliche organische Lösungsmittel, wie Toluol, öder Alkoxysilane, wie Tetraethoxysilan.

Der erste Schritt des erfindungsgemäßen Verfahrens wird vorzugsweise bei einer Temperatur von 0 bis 100°C, insbesondere 20 bis 70°C, und einem Druck von bevorzugt 900 und 2000 hPa, besonders bevorzugt 1000 bis 1500 hPa, durchgeführt.

Im ersten Schritt des erfindungsgemäßen Verfahrens werden Silan, Wasser, Alkohol und gegebenenfalls weitere Stoffe auf beliebige Art und Weise miteinander vermischt und reagieren gelassen, wobei Alkoxysilane, Alkoxychlorsilane und deren Hydrolysate und Kondensate sowie in gasförmiger Form Chlorwasserstoff, Alkylchlorid und Dialkylether entstehen. Dabei kann das im ersten Schritt anfallende Chlorwasserstoffgas direkt in anderen Verfahren eingesetzt werden, beispielsweise mit Methanol zur Herstellung von Chlormethan, welches wiederum bei der Methylchlorsilansynthese verwendet wird. So kann das Chlor im Kreis geführt werden, ohne an die Umwelt abgegeben zu werden.

Der erste Schritt wird kontinuierlich in einem Loop-Reaktor durchgeführt, besonders bevorzugt ohne Eintrag von mechanischer Energie, d.h. nur mit Naturumlauf.

Bei der im ersten Schritt erhaltenen Reaktionsmischung besteht die Siliciumkomponente im Wesentlichen aus chlor-, hydroxy- und alkoxyfunktionellen Silanen und Siloxanen sowie gegebenenfalls Cyclosiloxanen. Des Weiteren enthält die Reaktionsmischung Wasser, Alkohol, Chlorwasserstoff und in geringen Mengen Alkylchlorid, Dialkylether und ggf. weitere Stoffe.

Im Rahmen der vorliegenden Erfindung sollen sich Angaben über die Dichte auf eine Temperatur von 20°C und den Druck der umgebenden Atmosphäre, also 900 bis 1100 hPa, beziehen.

Als in Wasser unlösliche organische Lösungsmittel sollen im Rahmen der vorliegenden Erfindung solche Lösungsmittel verstanden werden, bei denen die Löslichkeit bei 25°C und dem Druck der umgebenden Atmosphäre, also 900 bis 1100 hPa, unter 1 g Lösungsmittel/100 g Wasser liegt.

Beispiele für im erfindungsgemäßen Verfahren gegebenenfalls eingesetzte in Wasser unlösliche organische Lösungsmittel sind gesättigte Kohlenwasserstoffe, wie Pentan, Hexan, Heptan oder Octan sowie deren verzweigte Isomeren und Mischungen der gesättigten Kohlenwasserstoffe, ungesättigte Kohlenwasserstoffe, wie Hexen, Hepten, Octen und 1-Decen, Ketone, wie Aceton, Methylethylketon und Methyl-*iso*-butylketon, und aromatische Kohlenwasserstoffe, wie Benzol, Toluol und Xylole, wobei es sich bevorzugt um Toluol handelt.

Falls im zweiten Schritt des erfindungsgemäßen Verfahrens wasserunlösliches.organisches Lösungsmittel eingesetzt wird, handelt es sich um Mengen von bevorzugt 1 bis 100 Mol, besonders bevorzugt 2 bis 90 Mol, jeweils bezogen auf 1 Mol Silicium-Komponente. Bevorzugt wird im zweiten Schritt in Wasser unlösliches organisches Lösungsmittel eingesetzt.

Falls erwünscht, können im zweiten Schritt des erfindungsgemäßen Verfahrens auch weitere Stoffe eingesetzt werden. Beispiele für gegebenenfalls eingesetzte weitere Stoffe sind Chlorsilane, wie etwa solche der Formel (I), oder Alkoxysilane, wie z.B. Tetraethoxysilan, oder Alkohole, wie z.B. Ethanol. Falls weitere Stoffe in der zweiten Stufe eingesetzt werden, handelt es sich um Mengen von bevorzugt 0,01 bis 40 Gewichtsteilen, bezogen auf 100 Gewichtsteile der im ersten Schritt eingesetzten Silicium-Komponente.

Im zweiten Schritt des erfindungsgemäßen Verfahrens wird.die Siliciumkomponente des im ersten Schritt erhaltenen Reaktionsgemischs sowie gegebenenfalls eingesetzte weitere Silane bis zum gewünschten Polymerisationsgrad durch gezielte Wasserzugabe hydrolysiert und kondensiert.

In einer bevorzugten Ausführungsform des erfindungsgemäßen Verfahrens wird im zweiten Schritt das im ersten Schritt erhaltene Reaktionsgemisch gegebenenfalls mit Toluol sowie gegebenenfalls mit weiteren Stoffen vermengt und Wasser über einen definierten Zeitraum zudosiert, wobei der Mischungsvorgang mittels Eintrag von mechanischer Energie, z.B. einem Rührer, durchgeführt wird.

Der zweite Schritt wird in einem Batchreaktor, wie z.B. einem solchen mit einem Innenvolumen von 12 m³, durchgeführt, indem das im ersten Schritt erhaltene Reaktionsgemisch von der Unterseite des Reaktors über eine Umpumpleitung (z.B. bei einer Umwälzleistung im Reaktor von 80 m³/h) in das untere Drittel des Reaktors gefördert wird und Wasser innerhalb eines Zeitraums von bevorzugt 5 bis 100 Minuten in die Umpumpleitung eindosiert wird, wobei gleichzeitig gerührt werden kann.

In einer weiteren besonders bevorzugten Ausführungsform des erfindungsgemäßen Verfahrens wird das in der zweiten Stufe eingesetzte Wasser von oben in den Reaktor dosiert, wobei gleichzeitig gerührt wird.

Der zweite Schritt des erfindungsgemäßen Verfahrens wird vorzugsweise bei einer Temperatur von 0 bis 100°C, insbesondere 20 bis 80°C, und einem Druck von bevorzugt 500 und 2000 hPa, besonders bevorzugt 600 bis 1500 hPa, durchgeführt.

Die im zweiten Schritt ablaufende Hydrolyse- bzw. Kondensationsreaktion kann nach beliebigen und bisher bekannten Verfahren beendet werden, wie z.B. Verdünnen mit Wasser oder Neutralisation mit Base, wie z.B. Natronlauge.

Im dritten Schritt des erfindungsgemäßen Verfahrens erfolgt die Trennung der gegebenenfalls lösungsmittelhaltigen Siloxanphase von der wässrig-alkoholischen Chlorwasserstoffphase. Dies kann nach dem Fachmann bekannten Methoden erfolgen, wie z.B. 5 bis 60 minütiges Ruhen lassen des Reaktionsgemisches, bis sich die Phasen separiert haben. Ablassen und aufarbeiten der HCl, Alkohol und wasserhaltigen Phase sowie Abpumpen und aufarbeiten der siloxanhaltigen Phase.

Die so erhaltene Siloxanphase kann nun nach beliebigen und an sich bekannten Verfahren aufgearbeitet werden, wie z.B. Neutralisation, Filtration und Abtrennung aller leichtflüchtigen Bestandteile, bevorzugt durch Destillation. Bei den leichtflüchtigen Bestandteilen handelt es sich bevorzugt um cyclische Siloxane und um das in Wasser unlösliche organische Lösungsmittel mit einer Dichte von unter 0,9 kg/l. Des Weiteren kann man beispielsweise bei der Siloxanphase durch Entfernen des Lösungsmittels, etwa durch Destillation in einem Dünnschichtverdampfer, die Konzentration erhöhen und so Organopolysiloxanlösungen herstellen oder das Lösungsmittel ganz entfernen und so lösemittelfreie Siloxane erhalten.

Nach dem erfindungsgemäßen Verfahren kann eine Vielzahl von Organopolysiloxanen mit definierten Eigenschaften reproduzierbar hergestellt werden, wie z.B. solche, die SiC-gebundene Reste, Hydroxyreste und/oder Alkoxyreste enthalten: Insbesondere ist das erfindungsgemäße Verfahren hervorragend geeignet zur Herstellung von Organopolysiloxanharzen.

Die erfindungsgemäß hergestellten Organopolysiloxane können bei 20°C und einem Druck von 900 bis 1100 hPa fest oder flüssig sein und haben ein durchschnittliches Molekulargewicht gegen Polystyrolstandard gemessen von vorzugsweise 162 bis 100 000 g/mol, besonders bevorzugt 200 bis 20 000 g/mol.

Die erfindungsgemäß hergestellten Organopolysiloxane sind zumindest zum Teil, vorzugsweise jedoch ganz, löslich in Alkoxy- und/oder Hydroxysilanen und deren Kondensaten

Bevorzugt handelt es sich bei den erfindungsgemäß hergestellten Organopolysiloxanen um solche der Formel

[RSiO₇₂]_{g}[R₂SiO]_{b}[R₃SiO_{1/2}]_{c}[SiO_{4/2}]_{d}[R¹O_{1/2}]ₑ[HO_{1/2}]_{f}

mit R gleich Methyl-, Isooctyl- oder Phenylrest, R¹ gleich Methyl-, Ethyl- oder Butylrest, g=2-200, b=0-100, c=0-50, d=0-100, e=0-20 und f=0-10.

Beispiele für die erfindungsgemäß hergestellten Organopolysiloxane sind [MeSiO_{3/2}]₇₂[Me₂SiO]₂₄[EtO_{1/2}]_{2,8}[HO_{1/2}]_{0,4}, [MeSiO_{3/2}]_{12,2}[Me₂SiO]_{3,3}[Me₃SiO_{1/2}]_{1,4}[EtO_{1/2}]_{0,6}[HO_{1/2}]_{0,18}, [MeSiO_{3/2}]_{15,3}[Me₂SiO]_{2,6}[Me₃SiO_{1/2}][IOSiO_{3/2}]_{0,8}[MeO_{1/2}]₂[HO_{1/2}]_{0,3} und [PhSiO_{3/2}]_{9,8}[Me₂SiO]₂[MeO_{1/2}]_{1,8}[BuO_{1/2}]_{0,04}[HO_{1/2}]_{0,18}, wobei Me gleich Methylrest, Et gleich Ethylrest, IO gleich Isooctylrest, Ph gleich Phenylrest und Bu gleich Butylrest bedeutet.

Die erfindungsgemäß hergestellten Organopolysiloxane können für alle Zwecke verwendet werden, für die auch bisher Organopolysiloxane eingesetzt worden sind, wie z.B. im Bautenschutz, im Coating-Bereich, in Kosmetik-Produkten, im Bereich Textil sowie Papier. Insbesondere eignen sie sich zur Herstellung von Emulsionen und als Bindemittel zur Herstellung von Farben und Lacke.

Das erfindungsgemäße Verfahren hat den Vorteil, dass es einfach in der Durchführung ist und Organopoylsiloxane mit einer hohen Ausbeute hergestellt werden können.

Das erfindungsgemäße Verfahren hat den Vorteil, dass das gegebenenfalls verwendete wasserunlösliche organische Lösungsmittel, der Chlorwasserstoff sowie der Alkohol auf einfache Weise rückgewonnen werden können.

Mit Hilfe des erfindungsgemäßen Verfahrens werden Organopolysiloxane erhalten, welche eine hohe Lagerstabilität aufweisen, sehr chloridarm sind, einen geringen VOC Gehalt aufweisen und sehr kostengünstig herstellbär sind.

Des Weiteren hat das Verfahren den Vorteil, dass bei Umgebungstemperatur feste Organopolysiloxane mit einer Glasübergangstemperatur (Tg) von bis zu 50°C (Aufheizrate 6°C pro Minute) herstellbar sind.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Beispiel 1

In eine kontinuierlich betriebene Reaktionsloop mit einem Innenvolumen von 1,35 m³, von dem 0,85 m³ Entgasungsvolumen darstellen, und Naturumlauf werden kontinuierlich 1000 kg/h eines Chlorsilangemisches aus 800 kg/h Methyltrichlorsilan und 200 kg/h Dimethyldichlorsilan und 700 kg/h eines Gemisches aus Ethanol 638 kg/h und Wasser 62 kg/h zudosiert. Die Reaktionstemperatur beträgt 30-35°C, der Überdruck beträgt 100 bis 250 mbar und die mittlere Verweilzeit 20-24 Minuten. Während der Reaktion werden 350-400 kg/h Chlorwasserstoff freigesetzt, welcher der Chlorwasserstoff Rückgewinnungsanlage zugeführt wird.

Zur Hydrolyse/Kondensation werden 2500 kg des so erhaltenen HCl-konzentrierten Teilalkoxylates mit 3000 kg Toluol in einem Batch Reaktor mit einem Innenvolumen von 12 m³ vorgelegt und 510 kg Wasser innerhalb von 75 Minuten unter guter Durchmischung .(80 m³/h) zudosiert. Die Reaktionstemperatur beträgt bis zu 70°C, der Überdruck beträgt 60 bis 250 mbar, die Verweilzeit 75 Minuten.

Durch Zugabe von 3050 kg Wasser wird die Säurekonzentration auf ein unreaktives Maß reduziert (HCl-Gehalt in der Säure-, Ethanol-, Wasserphase < 14 Gew.-%). Nach sorgfältiger Durchmischung von 5 bis 15 Minuten wird das Gemisch in einen 12 m³ großen Behälter abgelassen und 60 Minuten ruhen gelassen.

Anschließend wird die Ethanol/Chlorwasserstoff/wasserhaltige Phase von der toluolischen Siloxanphase getrennt.

In weiteren Aufarbeitungsschritten wird.die toluolische Harzphase in einer mit Füllkörpern betriebenen Destillationskolonne (Sumpftemperatur 114°C, Sumpfüberdruck 100 mbar, Verweilzeit 60 Minuten) auf einen höheren Festgehalt aufkonzentriert, mit Natriumbicarbonat neutralisiert, mit Aktivkohle von katalytisch wirksamen Metallspuren befreit und anschließend über Filterhilfsmittel filtriert und am Dünnschichtverdampfer (120-200°C) und 50 bis 100 mbar Vakuum von flüchtigen Bestandteilen befreit. Das im Reaktionsschritt der Aufkonzentration und Dünnschichten anfallende Toluol wird im zweiten Reaktionsschritt wieder eingesetzt. Die saure ethanolisch/wässrige Phase aus dem dritten Schritt (Phasentrennung) wird nach alkalisch stellen redestilliert und im ersten Reaktionsschritt wieder eingesetzt.

Es wird ein Organopolysiloxan mit einer gemäß ¹H-, ²⁹Si-NMR und GPC-Spektroskopie (gegen Polystyrolstandard gemessen, unter Berücksichtigung des Gewichtsmittels Mw) durchschnittlichen Summenformel [MeSiO_{3/2}]₇₂[Me₂SiO_{2/2}]_{23,9}[EtO_{1/2}]_{2/8}[HO_{/2}]_{0,4} erhalten.

### Beispiel 2

In die in Beispiel 1 beschriebene Reaktionsloop werden kontinuierlich 500kg/h eines Chlorsilangemisches aus 100 kg/h Methyltrichlorsilan und 400 kg/h Dimethyldichlorsilan und 475 kg/h eines Gemisches aus.433 kg/h Ethanol und 42 kg/h Wasser zudosiert (Reaktionstemperatur: 60°C, Überdruck 100 bis 250 mbar, Verweilzeit: 18 Minuten).

Zur Hydrolyse/Kondensation werden 2000 kg des so erhaltenen Chlorwasserstoffgas konzentrierten Reaktionsgemisches 1 mit 120 kg Trimethylchlorsilan in einem Batch Reaktor vorgelegt und 120 kg Wasser innerhalb von 85 Minuten unter guter Durchmischung zudosiert (Reaktionstemperatur: bis zu 70°C, Überdruck 10 bis 200 mbar, Verweilzeit: 85 Minuten).

Die weitere Aufarbeitung erfolgt wie im Beispiel 1 beschrieben.

Es wird ein Organopolysiloxan mit einer gemäß 1H-, 29Si-NMR und GPC Spektroskopie (gegen Polystyrolstandard gemessen, unter Berücksichtigung des Gewichtsmittels Mw) durchschnittlichen Formel [MeSiO_{3/2}]₅[Me₂SiO_{3/2}]_{22,9}[Me₃SiO_{1/2}]_{3,9}[EtO_{1/2}]_{0,3}[HO_{1/2}]_{0,04} erhalten.

## Patentansprüche

1. Verfahren zur Herstellung von Organopolysiloxanen, bei dem
in einem ersten Schritt kontinuierlich in einem Loop-Reaktor Chlorsilane mit 0,002 bis 0,6 Mol Wasser je Mol hydrolysierbaren Chlors und mit 0,3 bis 1,6 Mol Alkohol je Mol hydrolysierbaren Chlors umgesetzt werden, wobei das Molverhältnis Wasser zu Alkohol 0,001 bis 1,5 beträgt,
in einem zweiten Schritt das in der ersten Stufe erhaltene Reaktionsgemisch gegebenenfalls mit einem in Wasser unlöslichen organischen Lösungsmittel mit einer Dichte von unter 0,9 kg/l vermengt und Wasser in Mengen von 0,2 bis 100 mol Wasser je Mol Si-Komponente zudosiert wird, wobei der zweite Schritt in einem Batchreaktor durchgeführt wird, und
in einem dritten Schritt nach Beendigung der Reaktionen des zweiten Schritts die wässrig-alkoholische Phase abgetrennt wird.

2. Verfahren nach Anspruch 1, **dadurch gekennzeichnet, dass** im ersten Schritt Chlorsilane mit 0,0021 bis 0,58 Mol Wasser je Mol hydrolysierbaren Chlors umgesetzt werden.

3. Verfahren nach Anspruch 1 oder 2, **dadurch gekennzeichnet, dass** im ersten Schritt Chlorsilane mit 0,35 bis 1,5 Mol, Alkohol je Mol hydrolysierbaren Chlors umgesetzt werden.

4. Verfahren nach einem oder mehreren der Ansprüche 1 bis 3, **dadurch gekennzeichnet, dass** im ersten Schritt Wasser zu Alkohol im Molverhältnis von 0,0015 bis 1,45 eingesetzt wird.

5. Verfahren nach einem oder mehreren der Ansprüche 1 bis 4, **dadurch gekennzeichnet, dass** im zweiten Schritt in Wasser unlösliches Lösungsmittel eingesetzt wird.

## Claims

1. Process for the preparation of organopolysiloxanes, in which
in a first step, chlorosilanes are reacted continuously in a loop reactor with from 0.002 to 0.6 mol of water per mole of hydrolyzable chlorine and with from 0.3 to 1.6 mol of alcohol per mole of hydrolyzable chlorine, the molar ratio of water to alcohol being from 0.001 to 1.5,
in a second step, the reaction mixture obtained in the first step is optionally mixed with a water-insoluble organic solvent having a density of less than 0.9 kg/l, and water is metered in in amounts of from 0.2 to 100 mol of water per mole of Si component, the second step being carried out in a batch reactor, and
in a third step, after the end of the reactions of the second step, the aqueous alcoholic phase is separated off.

2. Process according to Claim 1, **characterized in that** in the first step, chlorosilanes are reacted with from 0.0021 to 0.58 mol of water per mole of hydrolyzable chlorine.

3. Process according to Claim 1 or 2, **characterized in that**, in the first step, chlorosilanes are reacted with from 0.35 to 1.5 mol of alcohol per mole of hydrolyzable chlorine.

4. Process according to one or more of Claims 1 to 3, **characterized in that**, in the first step, the molar water-to-alcohol ratio used is from 0.0015 to 1.45.

5. Process according to one or more of Claims 1 to 4, **characterized in that**, in the second step, water-insoluble solvent is used.

## Revendications

1. Procédé pour la production d'organopolysiloxanes, dans lequel
dans une première étape on fait réagir en continu dans un réacteur à circulation en boucle des chlorosilanes avec 0,002 à 0,6 mole d'eau par mole de chlore hydrolysable et avec 0,3 à 1,6 mole d'alcool par mole de chlore hydrolysable, le rapport molaire eau à alcool valant de 0,001 à 1,5,
dans une deuxième étape on introduit par addition dosée le mélange réactionnel obtenu dans la première étape éventuellement en mélange avec un solvant organique insoluble dans l'eau, ayant une densité inférieure à 0,9 kg/l et de l'eau en quantités de 0,2 à 100 moles d'eau par mole de composant Si, en effectuant la deuxième étape dans un réacteur fonctionnant en mode discontinu, et
dans une troisième étape une fois terminées les réactions de la deuxième étape on sépare la phase aqueuse-alcoolique.

2. Procédé selon la revendication 1, **caractérisé en ce que** dans la première étape on fait réagir des chlorosilanes avec 0,0021 à 0,58 mole d'eau par mole de chlore hydrolysable.

3. Procédé selon la revendication 1 ou 2, **caractérisé en ce que** dans la première étape on fait réagir des chlorosilanes avec 0,35 à 1,5 mole d'eau par mole de chlore hydrolysable.

4. Procédé selon une ou plusieurs des revendications 1 à 3, **caractérisé en ce que** dans la première étape on utilise l'eau en un rapport molaire à l'alcool de 0,0015 à 1,45.

5. Procédé selon une ou plusieurs des revendications 1 à 4, **caractérisé en ce que** dans la deuxième étape on utilise un solvant insoluble dans l'eau.
